# EUROPÄISCHE PATENTSCHRIFT

(11) **EP 2 393 904 B1**
(45) Veröffentlichungstag und Bekanntmachung des Hinweises auf die Patenterteilung: **18.10.2017**
(21) Anmeldenummer: 10705537.8
(22) Anmeldetag: 22.01.2010
(51) Int. Cl.: C10B 49/16, C10B 53/02

(54) **VERFAHREN ZUR ISOTHERMEN PYROLYSE MIT AUTOTHERMER TEILVERGASUNG**
METHOD FOR ISOTHERMAL PYROLYSIS WITH AUTOTHERMAL PARTIAL GASIFICATION
PROCÉDÉ DE PYROLYSE ISOTHERME AVEC GAZÉIFICATION PARTIELLE AUTOTHERME

(30) Priorität: 03.02.2009 DE 102009007176
(43) Veröffentlichungstag der Anmeldung: 14.12.2011
(73) Patentinhaber: Fraunhofer-Gesellschaft zur Förderung der angewandten Forschung e.V., 80686 München (DE)
(72) Erfinder: SEIFERT, Helmut, 67069 Ludwigshafen (DE); WEDDIGEN, Andreas, 76139 Karlsruhe (DE); HORNUNG, Andreas, 76185 Karlsruhe (DE)
(86) Internationale Anmeldenummer: PCT/EP2010/000363
(87) Internationale Veröffentlichungsnummer: WO 2010/089031

(56) Entgegenhaltungen:
- DE-A1- 4 309 283
- DE-A1-102005 037 917
- US-A- 4 056 461
- CUMMER K ET AL: "Indirectly heated biomass gasification using a latent-heat ballast-part 3: refinement of the heat transfer model" BIOMASS AND BIOENERGY, PERGAMON, OXFORD, GB, Bd. 28, Nr. 3, 1. März 2005 (2005-03-01), Seiten 321-330, XP025351497 ISSN: 0961-9534 [gefunden am 2005-03-01]

## Beschreibung

Die Erfindung betrifft ein Verfahren zur isothermen Pyrolyse mit autothermen Teilvergasung von kohlenstoffhaltigen Einsatzstoffen.

Eine Pyrolyse dient der thermischen endothermen Umsetzung von kohlenstoffhaltigen Einsatzstoffen wie Biomasse in flüssiges Pyrolysekondensat (Pyrolyseöl), festen Pyrolysekoks und Pyrolysegas als Pyrolyseprodukte unter Sauerstoffausschluss. Die Pyrolyse ist global betrachtet ein endothermer Prozess, jedoch können einzelne Teilreaktionen insbesondere bei der Pyrolyse von Biomasse auch exotherm verlaufen. Die Anteile der vorgenannten Pyrolyseprodukte sind durch die Zusammensetzung und Restfeuchte der Einsatzstoffe in Kombination mit verschiedenen Verfahrensparametern, insbesondere der Pyrolysetemperatur, der Pyrolysezeit (Reaktionszeit) sowie den Aufheiz- und Abkühlgeschwindigkeiten, beeinflussbar.

Unter einer isothermen Pyrolyse oder Verfahrensführung ist zu verstehen, dass die Oberflächentemperatur des Wärmeaustauschpartikels sich nur innerhalb eines engen Temperaturfensters von etwa ±10% oder weniger einer Solltemperatur bewegt (Bezug in °C, typische Pyrolysetemperaturen liegen bei ca. 400-500°C).

Eine autothermen Teilvergasung oder Verfahrensführung kennzeichnet sich dadurch, dass dabei endotherme und exotherme chemische Reaktionen parallel oder aufeinander folgend ablaufen und sich ein thermisches Gleichgewicht in der Weise einstellt, dass eine zusätzliche äußere Energiezufuhr zur Aufrechterhaltung des Vergasungsprozesses nicht mehr erforderlich ist.

Der Wärmebedarf für eine Vergasung von Pyrolyseprodukten wird beispielsweise durch kontrolliertes Verbrennen von Pyrolysekoksen oder Pyrolysegasen oder einer Kombination von beiden gedeckt. Dabei kann ein Teil der Pyrolyseprodukte, z.B. die leicht flüchtigen nicht kondensierbaren (T<20°C) Pyrolysegase abgezweigt werden und einer Heizvorrichtung für den Pyrolysereaktor, z.B. einem Brenner zugeführt. Bei einer gut geführten Pyrolyse liegt der Heizwert der Pyrolysegase - abhängig vom Einsatzstoff und der Pyrolysegutfeuchte - in der Größenordnung des Bedarfs, d.h. im Bereich um ca. 10% des Biomasseheizwertes oder sogar etwas darunter. Der Heizwert des Koksanteils übersteigt dagegen den Energiebedarf der Pyrolysereaktion in der Regel deutlich, um mehr als das Doppelte, so dass die Wärmeerzeugung durch eine teilweise Oxidation des Restkokses ausreichend ist, um die Pyrolysereaktion zu betreiben.

Typisch für praktisch alle Pyrolyse-Verfahren ist die Verwendung von separaten Wärmeträgern wie Wärmeaustauschpartikel mit meist hoher Wärmekapazität, die im Kreislauf durch den Reaktionsraum der Pyrolyse geführt werden. Zumeist wird im Wärmeträgerkreislauf ein zweiter vom Pyrolysereaktor gasseitig getrennter Verbrennungsreaktor installiert, in dem Pyrolysegas oder meist ein Teil des Pyrolysekokses mit Luft verbrannt werden und den Wärmeträger direkt geregelt aufheizen. Dabei können verschiedene Probleme auftreten, wie beispielsweise die Handhabung niedrigschmelzender Asche, potenzielle Risiken bei chloridhaltigen Pyrolyseeinsatzstoffen durch Bildung toxischer chlororganischer Verbindungen wie z.B. polychlorierter Dibenzo-p-dioxine und - Dibenzofurane, unvollständige Verbrennung der Pyrolysegase, etc. Durch eine indirekte Aufheizung des Wärmeträgers von außen in einem Wärmetauscher, können derartige Probleme vermieden werden, allerdings wegen der begrenzten Wärmedurchgangskoeffizienten auf Kosten eines größeren technischen Aufwandes.

In der EP 1 217 318 A1 wird eine Anlage zur thermischen Behandlung von Materialien beschrieben, umfassend mindestens eine Reaktionszone in einem mit Heizmitteln beheizten Drehofen mit zumindest einer Drehschnecke. Die Drehschnecke wird durch ein eigenes integriertes Heizmittel beheizt und dient dem Transport der zu behandelnden Materialien sowie von zusätzlichen wärmeleitenden Partikeln durch den Drehofen. Die Partikel dienen jedoch nicht einem Wärmeeintrag in die Reaktionszone, sondern einer möglichst effizienten Wärmeübertragung von den beiden Heizmitteln auf die zu behandelnden Materialien in der Reaktionszone.

Dagegen ist in der DE 10 2005 037 917 A1 ein Pyrolyseverfahren beschreiben, bei die vorgenannten Partikel nicht nur zur Wärmeverteilung in der Reaktionszone, sondern als Wärmeaustauschpartikel für den Wärmeeintrag, d.h. den Wärmetransport in die Reaktionszone hinein vorgesehen sind. Die Partikel werden extern aufgeheizt und mit der Lignocellulose in die Reaktionszone eingeleitet, wobei die Lignocellulose in der Reaktionszone von Partikeln erhitzt wird.

Die genannten Wärmeaustauschpartikel sind Komponenten mit einer üblicherweise hohen Wärmekapazität, die als temporäre Wärmespeicher an einem Ort oder zu einem Zeitpunkt Wärme aufnehmen, diese speichern, um diese an einem anderen Ort oder einer anderen Zeit wieder abzugeben. Sie eignen sich im Rahmen einer Pyrolyse für eine Einleitung thermischer Energie in die Einsatzstoffe, da sie als eine Vielzahl von Partikeln mit anderen Stoffen (Flüssigkeiten und Gasen oder auch mit Partikelschüttungen) vermischen lassen und damit die Wärme nahezu gleichmäßig auf das gesamte Stoffvolumen abgeben.

Infolge der Energieabgabe kühlen jedoch diese Wärmeaustauschpartikel während der Pyrolyse ab, und zwar mit abnehmender Wärmekapazität der wärmeabgebenden Materialien zunehmend schnell. Diesem Effekt kann nur durch ein sehr hohes Masseverhältnis von aufgeheizten Wärmeaustauschpartikeln zu pyrolysierendem Material entgegengewirkt werden.

Die verfahrenstechnischen Handhabung speziell kugelförmiger Wärmeaustauschpartikel im Rahmen einer Pyrolyse von kohlenstoffhaltigen Einsatzstoffen sowie deren grundlegenden Vorteile dabei werden beispielhaft in der DE 10 2005 037 917 A1 oder EP 1 354 172 B1 beschrieben. In das Reaktionsgut eingemischte Stahlkugeln geben bei der Pyrolyse Wärme an das Reaktionsgut ab und kühlen dabei ab. Eine bevorzugte "isotherme" Reaktionsführung innerhalb eines engen Temperaturbereiches ist nur bei sehr hohen Masseverhältnissen von Stahlkugeln zu Pyrolysegut möglich. Durch diese ungünstigen Verhältnisse wird der Reaktordurchsatz von Pyrolysegut eingeschränkt.

Davon ausgehend liegt die **Aufgabe der Erfindung** darin, ein eingangs genanntes Verfahren zur Pyrolyse von kohlenstoffhaltigen Einsatzstoffen so zu modifizieren, dass sie dem Ziel einer isothermen Durchführbarkeit der Pyrolyse wesentlich näher kommt. Ferner soll die Lösung der Aufgabe hierbei grundsätzlich ein geringeres Masseverhältnis von Wärmeaustauschpartikeln zu Pyrolysegut ermöglichen.

Die Aufgabe wird mit den Merkmalen des ersten Patentanspruchs gelöst. Die auf diesen rückbezogene Unteransprüche geben vorteilhafte Ausgestaltungen dieser Lösung wieder.

Zur Lösung wird ein Verfahren zur isothermen Pyrolyse mit autothermen Teilvergasung von kohlenstoffhaltigen Einsatzstoffen vorgeschlagen. Eine Vorrichtung zur isothermen Pyrolyse mit autothermen Teilvergasung von kohlenstoffhaltigen Einsatzstoffen umfasst ein Reaktionsgefäß mit Einlässen für die Eingabe von kohlenstoffhaltigen Einsatzstoffen (Pyrolysegut) und Wärmeaustauschpartikel in die Trocknungszone des Reaktionsgefäßes. Nach der Eingabe erfolgen in der Trocknungszone eine Vermischung der Wärmeaustauschpartikel bei einer mittleren Temperatur T2 mit dem Pyrolysegut sowie eine daraus resultierende Trocknung des Pyrolyseguts, wobei sich Wärmeaustauschpartikel und Pyrolysegut auf eine mittlere Temperatur T1 kleiner T2 abkühlt. Vorzugsweise stellt sich in den Wärmeaustauschpartikeln die gleiche Temperatur ein wie in der Mischung aus diesen mit dem Pyrolysegut bzw. Pyrolyseprodukten. Schwankungen in der Feuchtigkeit im Massenstrom der Einsatzstoffe lassen sich durch eine Anpassung der in den Wärmeaustauschpartikel gespeicherten Wärmeenergie ausgleichen, wobei die Trocknung eine erhöhte Feuchtigkeit eine erhöhte Temperatur T2 erfordert.

Von der Trocknungszone erfolgt bei unveränderter Temperatur T1 eine Weiterleitung der Mischung aus Pyrolysegut und Wärmeaustauschpartikel innerhalb des Reaktionsgefäßes in die Pyrolysezone. In dieser erfolgt eine isotherme Zersetzung des Pyrolyseguts zu festen, flüssigen und gasförmigen Pyrolyseprodukten. Die dabei vorherrschende unveränderte Temperatur T1 entspricht der mittleren Pyrolysetemperatur, wobei während genannter Pyrolyse Abweichungen von T1 um maximal 20°C (entspricht ca. 5%), vorzugsweise 10°C, weiter bevorzugt 5°C tolerierbar sind. Bevorzugt in der Pyrolysezone ist ein Auslass für gasförmige Pyrolyseprodukte vorgesehen. Die genannten abzusaugenden gasförmigen Pyrolyseprodukte umfassen vorzugsweise Dämpfe, Gase und/oder als Aerosol vorliegenden flüssigen Pyrolyseprodukte. Die flüssigen und insbesondere die festen Pyrolyseprodukte (Pyrolysekoks) sowie die Wärmeaustauschpartikel im Reaktionsgefäß bleiben vorzugsweise zurück.

Im Anschluss der Pyrolyse erfolgt eine Weiterleitung der nicht abgesaugten, d.h. festen und flüssigen Pyrolysebestandteile gemeinsam mit den Wärmeaustauschpartikeln innerhalb des Reaktionsgefäßes und vorzugsweise mit der Temperatur T1 mit maximal den vorgenannten Abweichungen in eine dritte Zone, der Teiloxidationszone bzw. Teilvergasungszone. Hierin erfolgt eine gezielte Einleitung eines Oxidationsmittels, z.B. Luft, vorzugsweise Sauerstoff, womit eine Teiloxidation, d.h. Verbrennung von Teilen der festen und ggf. noch vorhandenen flüssigen Pyrolysebestandteile eingeleitet wird. Pyrolysekokse von Biomassen sind außerordentlich reaktiv. Die Oxidation erfolgt bereits bei Temperaturen von unterhalb 300°C, d.h. deutlich unterhalb der bevorzugten Pyrolysetemperaturen. Eine Zündungsvorrichtung wie z.B. Brenner oder Heizelemente sind nicht erforderlich. Durch die Verbrennung von den festen und flüssigen Pyrolyseprodukten wird Wärme freigesetzt. Durch Wärmezufuhr in die Wärmeaustauschpartikel, erhitzen sich die Wärmeaustauschpartikel ausgehend von der Temperatur T1 auf eine mittlere Temperatur größer gleich T2.

Die Temperatur T2 liegt vorzugsweise 30-150°C, weiter bevorzugt 50 bis 100°C oberhalb der Temperatur T1.

Vorzugsweise wird die mittlere Temperatur der Wärmeaustauschpartikel direkt oder indirekt ermittelt und als Stellgröße für die Regelung der Oxidationsmittelzufuhr herangezogen. Eine direkte Ermittlung erfolgt vorzugsweise mittels eines Pyrometers oder einem anderen berührungslosen Messaufnehmer für die Temperatur direkt an mindestens einem Wärmeaustauschpartikel. Eine indirekte Ermittlung erfolgt z.B. aus einer integralen Temperaturmessung der Atmosphäre in der Teiloxidationszone, Thermoelementen in der Schüttung (Mischung) aus Pyrolyseprödukten und Wärmeaustauschpartikeln oder eine Messung der Temperatur eines nach oder bei der Teiloxidation ausgesonderten Wärmeaustauschpartikels.

Die Teiloxidationszone zeichnet sich durch eine regelbare Oxidationsmittelzufuhr sowie Auslässe für nicht oxidierte feste und flüssige Pyrolyseprodukte sowie für die Wärmeaustauschpartikel aus.

Vorzugsweise nach Verlassen der verbliebenen flüssigen und festen Pyrolysebestandteile und der Wärmeaustauschpartikel aus der Teiloxidationszone erfolgt mittels Abtrennungsmittel (z.B. Rüttelsieb, Rost, Gebläse, Magnete etc.) eine Trennung der Wärmeaustauschpartikel von den Pyrolyseprodukten und nachfolgende Rückführung der Wärmeaustauschpartikel zur Vermischung mittels Rückführungsmittel vom Auslass zum Einlass der Vorrichtung.

Für den Transport der Pyrolyseprodukte (bzw. Pyrolysegut) und der Wärmeaustauschpartikel durch die Trocknungszone, Pyrolysezone und Teiloxidationszone sind zudem kontinuierliche Fördermittel, z.B. eine Förderschnecke (z.B. Einfach- oder Doppelschnecke, Förderband etc.) von den Einlässen zu den Auslässen vorgesehen.

Die Teilzonen können auch getrennte durch Fördereinrichtungen für das feste Pyrolysegut, feste Pyrolyseprodukte und Wärmeaustauschkörper verbundene Einzelreaktoren sein.

Im Rahmen einer bevorzugten Ausführungsform wird das Reaktionsgefäß durch einen Ringkanal gebildet, bei der sich die Trocknungszone direkt an die Teiloxidationszone anschließt. Als kontinuierliches Fördermittel eignet sich z.B. ein im Ringkanal angeordnetes und drehbares Ringelements mit einer Vielzahl von Schottelementen. Die Schottelemente erstrecken sich über den gesamten Querschnitt des Ringkanals und teilen diesen in eine Vielzahl vorzugsweise gleichgroßer Fördervolumina, die sich mit dem Ringelement durch die vorgenannten Zonen des Reaktionsgefäßes bewegen. Die Trocknungszone weist lediglich einen Einlass für das Pyrolysegut auf, während eine Abtrennvorrichtung (z.B. Siebelement) für die festen und flüssigen Pyrolyseprodukte in der Teiloxidationszone gleichzeitig den Auslass für die abgetrennten flüssigen und festen Pyrolyseprodukte bildet. Die Wärmeaustauschpartikel verbleiben in ökonomisch vorteilhafter Weise, d.h. ohne einen signifikanten Energieverlust nach Außen im Ringkanal und werden durch das Ringelement direkt in die Trocknungszone weitergeleitet. Das Ringelement mit den Schottelementen bilden in dieser Ausführungsform die Transportmittel und die Rückführmittel. Ein weiterer Vorteil dieser Ausführungsform besteht darin, dass immer eine bestimmte Anzahl von Wärmeaustauschpartikel in einem Fördervolumen vorgesehen werden kann, die diese beim laufenden Betrieb weder verlassen noch in diese eindringen können. Der verfügbare Schmelz- und Erstarrungsenergiebetrag ist in jedem Fördervolumen gleich. Das Pyrolysegut wird bevorzugt in abgemessenen Portionen über die Einlässe in die jeweiligen Fördervolumen eingebracht. Eine exakte Verfahrensoptimierung wird durch diese Reproduzierbarkeit der Prozessbedingungen in vorteilhafter Weise begünstigt.

Ein wesentliches Merkmal der Erfindung umfasst den zweikomponentigen Aufbau der Wärmeaustauschpartikel. Die erste Komponente ist ein Hohlkörper, der eine zweite Komponente, einen Füllstoff im Hohlraum vollständig umschließt und diese damit von der Umgebung vollständig trennt. Wesentlich ist, dass der Füllstoff bei der Temperatur T1 eine Phasenumwandlung durchläuft und gleichzeitig die Temperatur T1 mit einer Pyrolysetemperatur zusammenfällt. Bei einer Phasenumwandlung weist ein Material in besonders vorteilhafter Weise ein hohes Wärmeaufnahme- oder Wärmeabgabevermögen auf, ohne dabei seine Temperatur zu ändern. Die Energie wird vielmehr in Kristallbildungsenergie (Erstarrungsenergie) oder Kristallauflösungsenergie (Schmelzenergie) umgewandelt. Im Rahmen der Erfindung ist die isotherm abgegebene Wärmemenge für die folglich ebenso isotherm ablaufende Pyrolyse nutzbar. Der Hohlkörper besteht aus einem Stahl oder einer Stahllegierung, wobei der Füllstoff im Innenvolumen des Hohlkörpers aus Zink, Blei oder Aluminium oder einer Legierung auf der Basis von Zink, Blei oder Aluminium besteht und bei T1 eine Phasenumwandlung durchläuft. Grundsätzlich kann der Füllstoff den Hohlraum des Hohlkörpers vollständig (bei gleichem oder geringeren Wärmeausdehnungskoeffizienten des Füllstoffes im Vergleich zum Hohlkörpermaterial) oder bei höheren Wärmeausdehnungskoeffizienten des Füllmaterials im Verhältnis zum Wandmaterial nur zu einem Anteil ausfüllen. Bei geringfügig höherem Wärmeausdehnungskoeffizienten der Füllung im Vergleich zum Mantelwerkstoff kann unter Beachtung des elastischen Bereiches des Mantelwerkstoffes (0.2% Dehngrenze) auch ein höherer Füllgrad als 90%, beispielsweise bis 95% realisiert werden.

Der Schmelzpunkt (Schmelztemperatur) des Füllstoffs liegt selbstverständlich unterhalb dem des Hohlkörpermaterials. Wird der Wärmeaustauschpartikel auf eine Temperatur zwischen den Schmelzpunkten des Füllstoffs und des Hohlkörpers aufgewärmt, erfolgt bei einer verwendungsgemäßen Abgabe von Wärmeenergie an die Umgebung eine Abkühlung zunächst bis zu der Schmelztemperatur des Füllstoffs. Ist diese erreicht, erfolgt eine weitere Abgabe von Wärmeenergie in vorteilhafter Weise solange bei gleich bleibender Temperatur, d.h. isotherm, bis der Füllstoff seinen Phasenübergang von flüssiger in fester Phase vollständig abgeschlossen hat (isotherme Wärmeenergiequelle). Dabei entspricht bei diesem Phasenübergang die Erstarrungsenergie der abgegebenen Wärmeenergie. Erst wenn der Phasenübergang vollständig abgeschlossen ist, erfolgt eine weitere Abkühlung des Wärmeaustauschpartikels.

Durch eine Aufheizung der Wärmeaustauschpartikel auf eine Temperatur knapp oberhalb des Schmelzpunktes des Füllstoffs lässt sich die Abkühlung vor Erreichen dieses Schmelzpunktes, d.h. die bis zu einer isothermen Wärmabgabe weitgehend minimieren. Die isotherme Wärmeabgabe ist dann in vorteilhafter Weise ohne große Verzögerung für eine anschließende isotherme Verfahrensführung insbesondere bei isotherm geführten vorwiegend endothermen Reaktionen wie eine Pyrolyse der vorgenannten Art oder zur Einstellung einer bestimmten Temperatur bis nach der Abgabe der Erstarrungsenergie als Wärme nutzbar.

Durch eine Aufheizung der Wärmeaustauschpartikel auf eine Temperatur knapp oberhalb des Schmelzpunktes des Füllstoffs lässt sich der Wärmeaustauschpartikel andererseits auch für eine isotherme Wärmeaufnahme nutzen (isotherme Wärmeenergiesenke), beispielsweise im Rahmen einer isothermen Verfahrensführung bei exothermen Reaktionen wie z.B. als Überhitzungsschutz bei der vorgenannten Teiloxidation der flüssigen und/oder festen pyrolyseprodukte. Dabei wird der als Festkörper vorliegende Füllstoff bis zum Schmelzpunkt aufgewärmt und nimmt beim anschließenden Aufschmelzen isotherm Wärme auf. Die maximal aufnehmbare isotherme Wärme entspricht der Schmelzenergie beim vollständigen Aufschmelzen des Füllstoffs.

Für eine isotherme Verfahrensführung ist es daher vorteilhaft, die Wärmeaustauschpartikel nur für einen begrenzten Zeitraum und/oder in einem definierten Massenverhältnis von Wärmeaustauschpartikel zu Pyrolysegut mit der wärmeaufnehmenden oder wärmeabgebenden Umgebung in wärmeaustauschenden Kontakt zu bringen. Folglich durchlaufen die Wärmeaustauschpartikel im eingangs genannten Verfahren im Rahmen eines Kreislaufs im Reaktionsgefäß die Trocknungszone, die Pyrolysezone sowie die Teiloxidationszone.

Die jeweiligen Aufenthaltszeiten für die vorgenannten Trocknungszone, Pyrolysezone und Teiloxidationszone und damit die in den Zonen jeweilig übertragene Energie sind durch die Geschwindigkeit des kontinuierlichen Fördermittels für das Pyrolysegut und Wärmeaustauschpartikel durch die Trocknungszone, Pyrolysezone und Teiloxidationszone von den Einlässen zu den Auslässen einstellbar. Besonders bevorzugt werden die Teiloxidation und die umlaufende Menge an Wärmeaustauschkörpern so gesteuert, dass der Füllstoff der Wärmeaustauschkörper zwischen einem Flüssiganteil zwischen 5 und 95 % oszilliert.

Die Einstellung der Verfahrensparameter für das beanspruchte Verfahren (Fördermittelgeschwindigkeit, Mischungsverhältnis, Zufuhr des Oxidationsmittels etc.) erfolgt vorzugsweise folgen-dermaßen:
In einem ersten Schritt wird bei einem vorgegebenen Massenstrom an Pyrolysegut zunächst der Energiebedarf zur Pyrolysierung ermittelt. Dieser Energiebedarf muss im Massenstrom bei einer isothermen Pyrolyse bei der Temperatur T1 (= Pyrolysetemperatur) vollständig von der Erstarrungsenergie des Füllstoffs der in den Massenstrom eingemischten Wärmeaustauschpartikel aufgebracht werden, vorzugsweise mit einem Erstarrungsenergieüberschuss von 100%, bevorzugt 70%, weiter bevorzugt 40%. Der Energiebedarf für die der Pyrolyse vorgeschalteten Trocknung des Pyrolyseguts wird ebenso von den Wärmeaustauschpartikeln aufgebracht, jedoch nicht oder nur teilweise durch die Erstarrungsenergie, sondern vorzugsweise durch eine Abkühlung ΔT der Wärmeaustauschpartikel ausgehend von einer Temperatur größer T1 (z.B. T2) auf T1. Vorzugsweise ist die zur Verfügung stehende Erstarrungsenergie so zu dimensionieren, dass sie den Energiebedarf der Trocknung vollständig mit abdeckt, vorzugsweise mit einem der vorgenannten Erstarrungsenergieüberschüsse.

In einem folgenden Schritt wird die Fördermittelgeschwindigkeit so eingestellt, dass nicht nur der vorgenannte Energiebedarf bei den Verfahrensschritten Trocknung und Pyrolyse zuverlässig auf das Pyrolysegut übertragen wird, sondern auch das Pyrolysegut zu den eingangs genannten Pyrolyseprodukten umgesetzt wird. Die pyrolytische Umsetzung lässt sich z.B. mittels Messung der Konzentration von Kohlenwasserstoffen mittels Flammenionisationsdetektor im Gasraum oberhalb der Teiloxidationszone kontinuierlich überprüfen. Entsprechend der gewünschten Umsetzung können die Verweilzeiten mittels Anpassung der Fördermittelgeschwindigkeit angepasst werden; die Fördermittelgeschwindigkeit ist dann soweit zu reduzieren oder die Anzahl der Wärmeaustauschkörper soweit zu erhöhen, bis eine gewünschte Umsetzung feststellbar ist.

Schließlich ist die Zufuhr an Oxidationsmittel in die Teiloxidationszone nach zuvor genannter Vorgehensweise einzustellen. Wesentlich ist eine ausreichende Energiefreisetzung durch die exotherm ablaufende Teiloxidation von flüssigen und/oder festen und/oder verbleibenden gasförmigen Pyrolyseprodukten, die für ein vorzugsweise vollständiges Schmelzen von erstarrtem Füllstoff erforderlich ist (Die freigesetzte Energie ist folglich größer als die erforderliche Schmelzenergie einzustellen T2 > T1). Ein Energieüberschuss ist vorzugsweise in den Wärmeaustauschpartikeln in Form einer geringen weiteren Erwärmung über T1, z.B. um einen Temperaturbetrag auf T2 oder darüber speicherbar. Als Mess- und Kontrollgröße für diesen Schritt dient in vorgenannter Weise die direkt oder indirekt gemessene Temperatur der Wärmeaustauschpartikel vorzugsweise beim Verlassen der Teiloxidationszone.

Vorzugsweise, insbesondere zur besseren automatisierbaren Handhabung im vorgenannten Kreislauf sind die Wärmüberträgerkörper, insbesondere deren Außenkontur kugelförmig. Sie lassen sich kugelförmige Wärmüberträgerkörper besser in ein Reaktionsgut einmischen und handhaben. Generell sind allerdings auch andere Geometrien wie z. B. Zylinder denkbar.

Der Hohlkörper besteht aus einem Stahl oder einer Stahllegierung. Wichtig ist zusätzlich dass das Hohlkörpermaterial sich gegenüber dem Füllstoff als auch gegenüber dem aufzuheizenden Material (Pyrolysegut, Pyrolyseprodukte) weitgehend inert verhält. Er dient primär der Wärmeübertragung von Füllstoff zu der Umgebung und weist bevorzugt eine für die meisten Metalle typische gute Wärmleitfähigkeit auf. Durch eine Wahl von besonders guten Wärmleitern wie Metalle oder Metalllegierungen und/oder durch eine geringe Wandstärke des Hohlkörpers und eine kleine Abmessungen des Wärmeaustauschpartikels (große Wärmeaustauschfläche) lässt sich die Wärmeübertragung weiter verbessern. Ist ein Einsatz im vorgenannten Kreislauf vorgesehen, sind hohe mechanische Festigkeiten und/oder gute tribologische Eigenschaften vorteilhaft. Durch eine Verschleißschutzschicht wie z.B. aus einem Karbid (z.B. SiC, TiC) oder einem Nitrid (z.B. TiN) auf der Metalloberfläche lassen sich die tribologischen Eigenschaften verbessern. Vorzugsweise bestehen die Wärmeaustauschpartikel aber aus einem tribologisch beständigen Metall wie Stahl, einer Nickel- oder Eisenbasis-Hochtemperaturlegierung, Titan oder Wolfram. Eine zusätzliche Beschleunigung der Wärmeübertragung ist durch eine oberflächenerhöhende Strukturierung des Hohlkörpers innen und außen möglich, vorzugsweise durch eine Rippung.

Die Auswahl des Füllstoffs richtet sich primär nach der gewünschten Temperatur bei der isothermen Pyrolyse (Erstarrungs- bzw. Schmelztemperatur des Füllstoffes T1) und nach der maximal möglichen aufzunehmenden oder abzugebenden Wärmemenge, d.h. nach der spezifischen Erstarrungs- oder Schmelzenergie. Bei einer Verwendung von Stahl als Hohlkörpermaterial eignen sich Zink (Schmelzpunkt 420°C), Blei (Schmelzpunkt 327°C) oder Aluminium (Schmelzpunkt 660°C) sowie Legierungen mit diesen Metallen als Füllstoffe.

Für die Pyrolyse von Biomassen ist ein Temperaturbereich von etwa 400-450°C besonders vorteilhaft (z.B. maximale Ausbeute der Ölfraktion in den Pyrolyseprodukten). Vorzugsweise ist der Füllstoff Zink oder eine Zn-Legierung. Reines Zink greift im flüssigen Zustand allerdings Eisenwerkstoffe an. Durch Zusatz von Aluminium (Masseanteil Al/Zn >0.15%) wird dieser Angriff sehr effektiv vermindert. Vorzugsweise liegt das Al/Zn-Verhältnis im Bereich von 0.15 -10%.

Als zusätzliche Maßnahme zur Reduzierung von Korrosion bzw. unerwünschte Lösungsreaktionen des Mantelstoffes im flüssigen Füllstoff bieten legierte Stähle (Cr, Ni, Mo etc.) den Vorteil einer weitgehenden Unempfindlichkeit gegen den Angriff von flüssigem Zink. Die Materialpaarung eines Chrom Nickel Stahles (z.B. X 2 Cr Ni Mo 17 13 2, Werkstoffnummer 1.4404) in Kombination mit einer Zn/Al Legierung (Al 0.15-10%, bevorzugt 0,15-1%) verhält sich weitgehend inert.

Eine Zn/Al Legierung mit geringen Al-Gehalten (0.15-1% Al) hat im Vergleich zu reinem Zink nur einen vernachlässigbaren Einfluss auf den Erstarrungstemperaturbereich (liquidus - soliduslinie). (Siehe Zn-Al-Phasendiagramm)so dass eine nahezu perfekte isotherme Verfahrensführung im Bereich von ca. 420°C ermöglicht wird.

Zudem weisen Zn/Al-Legierungen je nach Zusammensetzung Schmelztemperaturen zwischen 350 und 550°C auf und eignen sich in besonders vorteilhafter Weise für die Durchführung von nahezu isothermen Pyrolysereaktionen von Biomasse, Vorraussetzung für die Erzielung einer hohen gleich bleibenden Qualität von Pyrolyseprodukten.

Die Hohlkörper der Wärmüberträgerkörper sind zur Erzielung einer optimalen Wärmeübertragung zwischen Füllstoff und Umgebung vorzugsweise zu 90% oder zu mindestens 10% mit Füllstoff angefüllt. Dabei können jedoch bei stark unterschiedlichen thermische Ausdehnungen von Hohlkörpermaterial und Füllstoff zu einem nicht tolerierbaren Aufreißen des Hohlkörpers führen. Diese Gefahr lässt sich aber durch eine entsprechend Nachgiebigkeit der Hohlkörperwandung, beispielsweise über eine wellenförmige Wandung und einer geringen Wandstärke und / oder durch eine Auswahl eines plastisch verformbaren, hoch- oder superelastischen Materials (wie Formgedächtnislegierungen) reduzieren.

Vorzugsweise füllt der Füllstoff den Hohlkörper bei 20°C zu 10 bis 90%, besonders bevorzugt zu 80 bis 90% aus. Das verbleibende Restvolumen wird durch einen komprimierbaren Fluidpuffer z.B. aus einer Gasblase oder einem Gasvolumen oder auch ein Vakuum zur Kompensation von thermischen Ausdehnungsunterschieden ausgefüllt.

Die Einfüllung des Füllstoffs in den Hohlkörper erfolgt über eine Öffnung im Hohlkörper, die vor einer Verwendung als Wärmeaustauschpartikel verschlossen wird. Der Verschluss erfolgt vorzugsweise durch Verschweißung, alternativ auch durch Verlöten oder durch eine Verschraubung (z. B. dichtende Madenschraube).

Die Erfindung wird im Folgenden anhand von Ausführungsbeispielen und Figuren näher erläutert. Es zeigen
**Fig.1a** **und b** eine prinzipielle Seitenansicht einer Vorrichtung zur isothermen Pyrolyse mit autothermen Teilvergasung von kohlenstoffhaltigen Einsatzstoffen **(a)** sowie ein Diagramm mit der Temperatur der Wärmeaustauschpartikel über die Weglänge durch die Vorrichtung **(b),**
**Fig.2** eine Schnittdarstellung eines Wärmüberträgerpartikels in seiner Grundbauform sowie
**Fig.3a** **bis d** die Schnittdarstellungen weiterer Ausführungsformen der Wärmeaustauschpartikel.

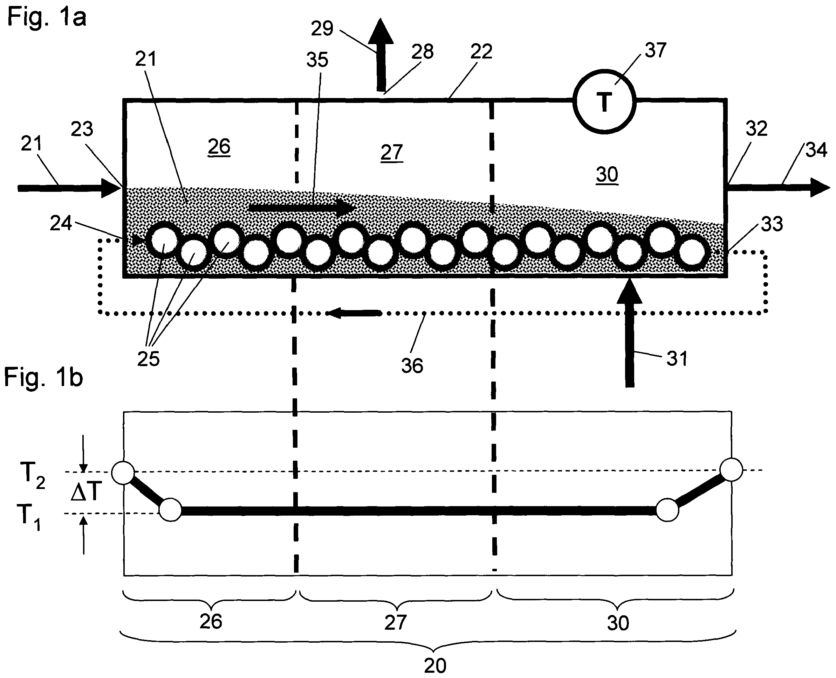

Eine Grundausführung der Vorrichtung zur isothermen Pyrolyse mit autothermen Teilvergasung von kohlenstoffhaltigen Einsatzstoffen (Pyrolysegut **21**) zeigt **Fig.1a****.** Sie umfasst ein Reaktionsgefäß **22** mit Einlässe **23, 24** für Pyrolysegut **21** und Wärmeaustauschpartikel **25,** einer Trocknungszone **26,** einer Pyrolysezone **27** mit Auslass **28** für gasförmige Pyrolyseprodukte **29** sowie einer Teiloxidationszone **30** mit einer regelbaren Oxidationsmittelzufuhr **31,** einer Temperaturmessvorrichtung **37** sowie Auslässe **32, 33** für feste und flüssige Pyrolyseprodukte **34** sowie für die Wärmeaustauschpartikel **25.**

Die kontinuierlichen Fördermittel zwischen den Einlässen **23, 24** und den Auslässen **32, 33** werden in **Fig.1a** schematisch durch eine Vorschubrichtung **35** angedeutet. Ferner sind bei dieser Ausführungsform Abrennungsmittel für die Wärmeaustauschpartikel von den Pyrolyseprodukten im Bereich der Auslässe **32, 33** sowie Rückführungsmittel **36** vom Auslass **33** zum Einlass **24** für die Wärmeaustauschpartikel **25** vorgesehen.

Die Temperatur der Wärmeaustauschpartikel und näherungsweise auch der Mischung dieser mit dem Pyrolysegut bzw. den Pyrolyseprodukten über die Reaktionsraumerstreckung **20** zwischen den Einlässen **23, 24** und den Auslässen **32, 33** in Analogie zu **Fig.1a** ist in **Fig.1b** wiedergegeben. Die Wärmeaustauschpartikel treten mit einer Temperatur **T2** in die Trocknungszone **26** ein, geben ein Teil der gespeicherten Energie an das Pyrolysegut ab, wobei sich die Temperatur der Wärmeaustauschpartikel um **ΔT** auf die Erstarrungstemperatur **T1** des Füllstoffs abkühlt und anschließend ein erster Teil des flüssigen Füllstoffs erstarrt. Es folgt eine Weiterleitung in den Bereich der Pyrolysezone **27,** in der eine endotherme isotherme Pyrolyse des Pyrolyseguts unter Energiezufuhr aus der Erstarrungsenergie des Füllstoffs stattfindet. In der darauf folgenden Teiloxidationszone **30** findet dagegen eine exotherme Reaktion statt, wobei die Wärmeaustauschpartikel Energie wieder aufnehmen und zunächst isotherm in ein vollständiges Wiederaufschmelzen des Füllstoffs und anschließender Erwärmung der Wärmeaustauschpartikel auf T2 speichern.

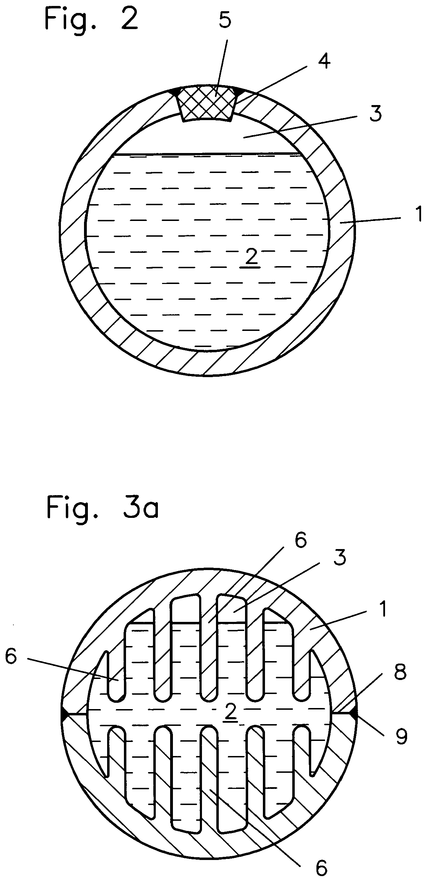

**Fig.2** zeigt die Grundbauform eines Wärmeaustauschpartikels mit Hohlkörper **1** sowie einem Füllstoff **2,** der den Innenraum des Hohlkörpers zu ca. 80 bis 90% unter Bildung eines Gaspuffers **3** oder Vakuum ausfüllt. Das Gasvolumen dient der eingangs genannten volumetrischen Kompensation von thermischen Ausdehnungsunterschieden zwischen Hohlkörper und Füllstoff. Der Hohlkörper **1** ist aus einem Stahl, beispielsweise den vorgenannten Cr-Ni-Stahl und weist zur Einfüllung des Füllstoffs eine verschließbare Öffnung **4** mit dichtend einschraubbaren oder verschweißbaren Verschlussstopfen **5** auf.

**Fig.3a** zeigt ebenfalls einen Wärmeaustauschpartikel mit kugelförmiger Außenkontur. Der Hohlkörper weist jedoch angeformte, in den Innenraum hineinragende und den Füllstoff **2** durchdringende z.B. kreisförmig oder gerade verlaufende Rippen **6** auf. Außerdem lässt sich ein kugelförmiger Hohlkörper grundsätzlich und wie im Rahmen dieses Ausführungsbeispiels dargestellt als zwei Halbkugelschalen **7** herstellen, die jeweils mit Füllstoff angefüllt auf einer gemeinsamen Passfläche **8** aneinandergesetzt mit einer umlaufenden Schweißnaht **9** miteinander verschweißt werden. Alternativ zu der umlaufenden Schweißnaht ist eine Verbindung über eine umlaufende Gewindeverbindung möglich. Durch eine bevorzugte, aber nicht dargestellte formschlüssig ineinander greifende Strukturierung der beiden Passflächen zueinander sichert man eine verschiebungssichere Verbindung der Halbkugelschalen vor dem Verschweißen (oder Verschrauben, einem alternativen Verlöten oder Verkleben). Der Füllstoff liegt dabei eingefüllt in den Halbkugelschalen bei Raumtemperatur, d.h. in einer festen Phase vor. Eine separate Einfüllöffnung wie im vorgenannten Ausführungsbeispiel ist nicht erforderlich. Außerdem lassen sich bei der gusstechnischen Herstellung (Druckguss, Feinguss, Spritzguss etc.) von Halbkugelschalen die innen angeordneten Rippen **6** einfach und präzise anformen. Wie bei der vorgenannten Ausführungsform (**Fig.2**) ist der Innenraum des Hohlkörpers **2** unter Bildung eines Gaspuffers **3** nicht vollständig gefüllt.

Ein Gaspuffer stellt aber grundsätzlich eine lokale thermische Barriere dar, die eine Wärmeübertragung, insbesondere einen Wärmeübergang von Füllstoff und Hohlkugel behindert. Bei hohen Füllgraden und guter Wärmeleitung des Hohlkörpermaterials ist dieser Effekt wegen der geringen Kontaktfläche zwischen Gaspuffer und Hohlkörper allerdings vernachlässigbar. Bei der Pyrolyse von Feststoffschüttungen liegt der wesentliche Wärmeübergangswiderstand zwischen der Außenfläche des Wärmeaustauschpartikels (äußere Mantelkörperoberfläche) und dem zu pyrolysierenden Material.

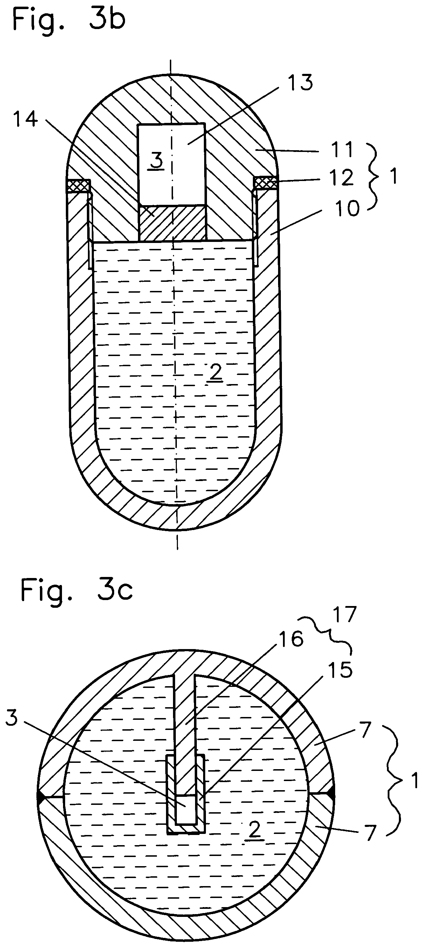

**Fig.3b** **und c** zeigen beispielhaft zwei Ausführungsformen, bei denen der Gaspuffer durch geeignete Mittel im Wärmeaustauschpartikel geführt ist. Auf diese Weise lässt die thermische Barriere an eine gewünschte Stelle im Wärmeaustauschpartikel fix anordnen.

**Fig.3b** gibt ein Wärmeaustauschpartikel mit zylinderförmiger oder kapselförmiger Außenkontur wieder, bei dem der Hohlkörper **1** aus einer Becherkomponente **10** mit Schraubverschluss **11** und einer Dichtung **12** gebildet wird. Der Gaspuffer **3** befindet sich an definierter Stelle in einer Sackbohrung **13** im Schraubverschluss **11** und ist in dieser durch einen in der Bohrung verschiebbaren Kolben **14** von dem Füllstoff **2** getrennt. Der Füllstoff füllt den verbleibenden Innenraum zwischen Becherkomponente, Schraubverschluss und Kolben ansonsten vollständig aus, wobei thermische Ausdehnungsunterschiede zwischen Hohlkörper und Füllstoff durch ein Verschieben des Kolbens in die Sackbohrung gegen den Gaspuffer kompensierbar sind.

**Fig.3c** zeigt dagegen ein Wärmeaustauschpartikel mit kugelförmiger Außenkontur und dem in **Fig.3a** bereits dargestellten Grundaufbau mit zwei Halbkugelschalen **7.** Der Gaspuffer **3** ist auch hier in definierter Lage durch eine Kolbenanordnung **17** zwar vollständig von dem Füllstoff **2** getrennt, aber mechanisch durch eine Verschiebung eines Zylinderbechers **15** auf einer an einer Halbkugelschaleninnenfläche angeformten Kolbenstange **16** korrespondierend verbunden. Anstelle der Kolbenanordnung **17** ließe sich der Gaspuffer auch in einem abgeschlossenen flexiblen Metallschlauch auf der Kolbenstange mittig im Wärmeaustauschpartikel positionieren.

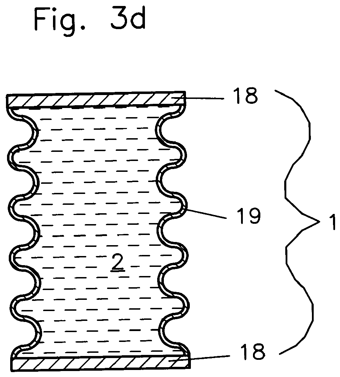

Beispielhaft für ein Wärmeaustauschpartikel, dessen Hohlkörper **1** vollständig mit Füllstoff **2** aufgefüllt ist, zeigt **Fig.3d****.** Der Hohlkörper **1** besteht aus einem an beiden Enden mit Stopfen **18** dichtend verschlossenen (Verschweißung, Verlötung, Verklebung, Pressung) gewellten und damit flexiblen Metallschlauchstück **19.** Die gewellte Wan dung des Metallschlauchstücks lässt nicht nur eine Veränderung des Innenvolumens des Hohlkörpers zu und macht damit einen Gaspuffer überflüssig, sondern erhöht auch die für eine Wärmeübertragung an die Umgebung zur Verfügung stehende Oberfläche des Wärmeaustauschpartikels.

Die bevorzugte Verwendung der Erfindung findet sich in einer isothermen Pyrolyse mit autothermer Teilvergasung von kohlenstoffhaltigen Einsatzstoffen wie bevorzugt Biomasse oder auch Braunkohle zur Herstellung von Vorprodukten für synthetische Kraftstoffe oder von Kohlenwasserstoffen als Rohstoffe für die Verwendung in der chemischen Industrie. Dabei kommen bevorzugt kugelförmige Wärmeaustauschpartikel, wie in **Fig.2, 3a** **und** **3c** dargestellt, in einem Pyrolysereaktor-Kreislauf zum Einsatz. Kugelförmige Körper weisen im Gegensatz zu anders gestaltete Formkörper wie Quader oder Zylinder keine definierbare Orientierung auf. Sie sind daher verfahrenstechnisch einfacherer transportierbar, lassen sich besser in die Einsatzstoffe einmischen und wieder abtrennen und weisen über die gesamte Kugeloberfläche nicht nur gleichmäßigere Wärmeübertragungsvoraussetzungen, sondern auch eine höhere mechanische Stabilität auf.

**Tab.1 und 2** zeigen beispielhaft die empirisch ermittelten Produktverteilungen aus einer Pyrolyse bei verschiedenen Temperaturen von Weizenstroh-Mehl (**Tab.1**). Ähnlich verhalten sich Pellets, bestehend aus beispielsweise Rapsstroh, Sägemehl, oder zerkleinerte beliebige Biomassen sowie biogene Rückstände aber auch Klärschlammpellets. **Tab.2** gibt das Ergebnis für Weizenstrohpellets in Gewichtsanteile an Pyrolysekoks, Pyrolyseöl und Pyrolysegas wieder. Der bei der Pyrolyse gebildete Dampf teilt sich nach Kondensation in eine Gas- bzw. Ölfraktion. Die **Tab.1 und 2** zeigen deutlich, wie empfindlich die Produktverteilung auf geringe Temperaturvariationen reagiert.

**Tab.1 Produktverteilung bei einer Pyrolyse von Weizenstroh-Mehl in Gew.%**

| | 325°C | 350°C | 375°C | 385°C | 400°C |
|---|---|---|---|---|---|
| Pyrolysekoks | 73 | 48 | 38,2 | 36,2 | 33,5 |
| Pyrolyseöl | 18 | 34 | 37,7 | 41, 6 | 34,6 |
| Pyrolysegas | 9 | 18 | 24,1 | 22,2 | 31,9 |

**Tab.2 Produktverteilung bei einer Pyrolyse von Weizenstrohpellets in Gew.%**

| | 375°C | 385°C | 400°C | 450°C | 500°C |
|---|---|---|---|---|---|
| Pyrolysekoks | 45 | 39 | 35 | 31,2 | 28,3 |
| Pyrolyseöl | 36 | 42 | 44,5 | 42,4 | 40,5 |
| Pyrolysegas | 19 | 19 | 20,5 | 26,4 | 31,2 |

Beide Versuchsreihen zeigen bereit bei einer Veränderung der Pyrolysetemperatur von 25°C und auch geringer deutlich voneinander abweichende Produktverteilungen, die man im Rahmen einer isothermen Verfahrensführung vermeiden kann. Sind bestimmte Ausbeuten eines der Pyrolyseprodukte von besonderer Bedeutung, wie z.B. an Pyrolyseöl, so ist eine definierte Pyrolysetemperatur innerhalb enger Grenzen unbedingt einzuhalten.

Steht für eine Pyrolyse nur ein eingeschränktes Temperaturfenster zur Verfügung, bestimmt die maximale übertragbare Wärmeenergie von den Wärmeüberträgern auf die Einsatzstoffe die Wirtschaftlichkeit des Verfahrens. Auch hier bietet die vorgenannte isotherme Verfahrensführung den Vorteil, dass für einen Energieübertrag zu einer gespeicherten Wärmekapazität noch die hohe Schmelzwärme des Füllstoffs zur Verfügung steht.

**Tab.3** fasst die gemessenen Enthalpieverhälnisse eines Wärmeaustauschpartikels mit verschiedenen Füllstoffen im Vergleich zu einer massiven Stahlkugel bei verschiedenen Temperaturspannen zusammen. Die kugelförmigen Wärmeaustauschpartikel weisen wie die als Referenz aufgeführten Stahlkugeln einen Durchmesser von 2cm auf. Die Wandungsdicken der zum Einsatz kommenden Hohlkörper betrugen 1,5mm. Der Füllgrad mit Füllstoff lag bei 0,8. Als Füllstoffe dienten jeweils Zink (Schmelztemperatur ca. 420°C), Blei (Schmelztemperatur ca. 327°C) und Aluminium (Schmelztemperatur ca. 660°C). Bei den Temperaturspannen wurden jeweils die relevanten Schmelztemperaturen überquert.

**Tab.3: Enthalpieverhältnisse von Wärmeaustauschpartikel zu Stahlkugeln (d=2cm, Wandstärke 1.5mm) über verschiedene Temperaturspannen**

| | 10°C | 20°C | 30°C | 40°C | 50°C |
|---|---|---|---|---|---|
| Stahl | 1 | 1 | 1 | 1 | 1 |
| Fe/Pb-Leg. | 4,5 | 2,5 | 2 | 1,5 | 1,3 |
| Fe/Zn-Leg. | 12 | 6,5 | 4,8 | 3,8 | 3 |
| Fe/Al-Leg. | 16 | 8,5 | 6 | 4,8 | 4 |

Die zur Verfügung stehenden zusätzlichen Schmelzwärmemengen erhöhen besonders bei geringen Temperaturdifferenzen, d.h. bei möglichst isothermen Pyrolysen die übertragbare Gesamtenergie signifikant.

Durchfährt man z.B. den für die Pyrolyse von Lignocellulose (Strohpyrolyse) besonders interessanten Temperaturbereich zwischen 400 und 450°C (Temperaturspanne, d.h. Abkühlung um 50°C), so ergibt sich bei Verwendung der vorgenannten Wärmeaustauschpartikel mit Zink als Füllstoff eine um den Faktor 3 höhere Energieabgabe im Verhältnis zu einer massiven Stahlkugel. Das bedeutet im Umkehrschluss, dass bei gleicher Kugelgeometrie die Kugelanzahl im Pyrolysereaktor um den Faktor 3 reduziert werden kann. Liegt die zulässige Temperaturspanne, d.h. die zulässige Abkühlung bei nur 10°C (nahezu isotherme Bedingungen um ein definiertes Pyrolyseproduktspektrum zu erhalten), erhöht sich dieser Faktor in besonders vorteilhafter Weise auf ca. 12.

### Bezugszeichenliste:

- 1: Hohlkörper
- 2: Füllstoff
- 3: Gaspuffer
- 4: Einfüllöffnung
- 5: Verschlussstopfen
- 6: Rippen
- 7: Halbkugelschalen
- 8: Passfläche
- 9: Umlaufende Schweißnaht
- 10: Becherkomponente
- 11: Schraubverschluss
- 12: Dichtung
- 13: Sackbohrung
- 14: Kolben
- 15: Zylinderbecher
- 16: Kolbenstange
- 17: Kolbenanordnung
- 18: Stopfen
- 19: Metallschlauchstück
- 20: Reaktionsraumerstreckung
- 21: Pyrolysegut
- 22: Reaktionsgefäß
- 23: Einlass für Pyrolysegut
- 24: Einlass für Wärmeaustauschpartikel
- 25: Wärmeaustauschpartikel
- 26: Trocknungszone
- 27: Pyrolysezone
- 28: Auslass für gasförmige Pyrolyseprodukte
- 29: gasförmige Pyrolyseprodukte
- 30: Teiloxidationszone
- 31: Oxidationsmittelzufuhr
- 32: Auslass für feste und flüssige Pyrolyseprodukte
- 33: Einlass für Wärmeüberträgerpartikel
- 34: feste und flüssige Pyrolyseprodukte
- 35: Vorschubrichtung
- 36: Rückführungsmittel
- 37: Temperaturmessvorrichtung

## Patentansprüche

1. Verfahren zur isothermen Pyrolyse mit autothermen Teilvergasung von kohlenstoffhaltigen Einsatzstoffen, umfassend die folgenden Verfahrensschritte:
a) Vermischung Wärmeaustauschpartikel **(25)** mit einer mittleren Temperatur **T2** und Pyrolysegut **(21),**
b) Trocknung des Pyrolyseguts, wobei sich Wärmeaustauschpartikel und Pyrolysegut auf eine mittlere Pyrolysetemperatur **T1** kleiner **T2** abkühlt,
c) Isotherme Zersetzung des Pyrolyseguts zu festen, flüssigen und gasförmigen Pyrolyseprodukten **(29, 34)** und Absaugung der gasförmigen Pyrolyseprodukte bei Pyrolysetemperatur T1 +/- 20°C, wobei die Wärmeaustauschpartikel aus mit einem Füllstoff **(2)** gefüllte Hohlkörper **(1)** aus einem Stahl oder einer Stahllegierung bestehen und der Füllstoff aus Zink, Blei oder Aluminium oder einer Legierung auf der Basis von Zink, Blei oder Aluminium besteht und bei T1 eine Phasenumwandlung durchläuft,
d) Teiloxidation der flüssigen und festen Pyrolyseprodukte unter einer geregelten Zufuhr eines Oxidationsmittels, **(31)** wobei sich Wärmeaustauschpartikel und flüssigen und festen Pyrolyseprodukte auf eine mittlere Temperatur größer gleich **T2** erhitzen sowie
e) Abtrennung der Wärmeaustauschpartikel von den flüssigen und festen Pyrolyseprodukten sowie Rückführung **(36)** der Wärmeaustauschpartikel zur Vermischung mit Pyrolysegut **(21)**.

2. Verfahren nach Anspruch 1, wobei bei der Teiloxidation die Temperatur in der Mischung aus Wärmeaustauschpartikel und flüssigen und festen Pyrolyseprodukte gemessen wird und die Zufuhr des Oxidationsmittels bei Erreichen der Temperatur T2 reduziert wird.

3. Verfahren nach Anspruch 1 oder 2, wobei die Phasenumwandlung des Füllstoffes der Wärmeaustauschpartikel bei **T1** einen Übergang von flüssig zu fest und umgekehrt umfasst.

4. Verfahren nach Anspruch 1 oder 2, wobei die Verfahrensschritte a) bis e) im Rahmen eines kontinuierlichen Stoffstroms durchlaufen werden, wobei die Wärmeaustauschpartikel durch die Rückführung einen kontinuierlichen Kreislauf durchlaufen.

5. Verfahren nach einem der vorgenannten Ansprüche, wobei der Füllstoff **(2)** das Innenvolumen des Hohlkörpers **(1)** bei 20°C zu 10 bis 90% und ein Gaspuffer **(3)** oder Vakuum das verbleibende Innenvolumen ausfüllt.

6. Verfahren nach einem der vorgenannten Ansprüche, wobei der Hohlkörper **(2)** eine kugelförmige Außenkontur aufweist.

## Claims

1. Process for the isothermal pyrolysis with autothermal partial gasification of carbon-containing starting materials, comprising the following process steps:
a) mixing of heat exchange particles **(25)** having an average temperature **T2** and pyrolysis material **(21),**
b) drying of the pyrolysis material, wherein heat exchange particles and pyrolysis material are cooling to an average pyrolysis temperature **T1** which is less than **T2,**
c) isothermal decomposition of the pyrolysis material to form solid, liquid and gaseous pyrolysis products **(29, 34)** and drawing-off of the gaseous pyrolysis product at the pyrolysis temperature T1 ± 20°C, where the heat exchange particles consist of hollow bodies **(1)** made of a steel or a steel alloy and are filled with a filler **(2)** and wherein the filler consists of zinc, lead or aluminium or an alloy based on zinc, lead or aluminium and undergoes a phase transformation at T1,
d) partial oxidation of the liquid and solid pyrolysis products with regulated introduction of an oxidant **(31),** wherein heat exchange particles and liquid and solid pyrolysis products are heating up to an average temperature of greater than or equal to **T2** and
e) separation of the heat exchange particles from the liquid and solid pyrolysis products and recirculation **(36)** of the heat exchange particles to mixing with pyrolysis material **(21).**

2. Process according to Claim 1, wherein the temperature in the mixture of heat exchange particles and liquid and solid pyrolysis products is measured during the partial oxidation and wherein the introduction of the oxidant is reduced when the temperature T2 is reached.

3. Process according to Claim 1 or 2, wherein the phase transformation of the filler of the heat exchange particles at **T1** comprises a transition from liquid to solid and vice versa.

4. Process according to Claim 1 or 2, wherein the process steps a) to e) are passed through by a continuous stream of material, wherein the heat exchange particles are going through a continuous circuit as a result of recirculation.

5. Process according to any of the preceding claims, wherein the filler **(2)** fills the internal volume of the hollow body **(1)** to an extent of from 10 to 90% at 20°C and a gas buffer **(3)** or vacuum fills the remaining internal volume.

6. Process according to any of the preceding claims, wherein the hollow body **(2)** has a spherical external contour.

## Revendications

1. Procédé de pyrolyse isotherme avec gazéification partielle autotherme de matières de départ contenant du carbone, comprenant les étapes de procédé suivantes:
a) le mélange de particules d'échange de chaleur (25) ayant une température moyenne T2 et d'une matière à pyrolyser (21),
b) le séchage de la matière à pyrolyser, les particules d'échange de chaleur et la matière à pyrolyser refroidissant à une température de pyrolyse moyenne T1 inférieure à T2,
c) la décomposition isotherme de la matière à pyrolyser en produits de pyrolyse solides, liquides et gazeux (29, 34) et l'aspiration des produits de pyrolyse gazeux à une température de pyrolyse T1 ± 20 °C, les particules d'échange de chaleur étant constituées d'un corps creux (1) en un acier ou un alliage d'acier, rempli avec une charge (2), et la charge étant constituée de zinc, de plomb ou d'aluminium ou d'un alliage à base de zinc, de plomb ou d'aluminium, et subissant un changement de phase à T1,
d) l'oxydation partielle des produits de pyrolyse liquides et solides avec apport régulé d'un oxydant (31), les particules d'échange de chaleur et les produits de pyrolyse liquides et solides se réchauffant à une température moyenne supérieure ou égale à T2, et
e) la séparation des particules d'échange de chaleur des produits de pyrolyse liquides et solides, et la recirculation (36) des particules d'échange de chaleur pour le mélange avec la matière à pyrolyser (21).

2. Procédé selon la revendication 1, dans lequel, lors de l'oxydation partielle, la température dans le mélange de particules d'échange de chaleur et de produits de pyrolyse liquides et solides est mesurée et l'apport de l'oxydant est réduit lorsque la température T2 est atteinte.

3. Procédé selon la revendication 1 ou 2, dans lequel le changement de phase de la charge des particules d'échange de chaleur à T1 comprend une transition de liquide à solide et inversement.

4. Procédé selon la revendication 1 ou 2, dans lequel les étapes de procédé a) à e) sont parcourues dans le cadre d'un courant de matière continu, les particules d'échange de chaleur parcourant un circuit continu grâce à la recirculation.

5. Procédé selon l'une quelconque des revendications susmentionnées, dans lequel la charge (2) remplit le volume intérieur du corps creux (1) à 20 °C à hauteur de 10 à 90 % et un tampon gazeux (3) ou un vide remplit le volume intérieur restant.

6. Procédé selon l'une quelconque des revendications susmentionnées, dans lequel le corps creux (2) présente un contour extérieur sphérique.
